# EUROPEAN PATENT SPECIFICATION

(11) **EP 2 099 973 B1**
(45) Date of publication and mention of the grant of the patent: **11.07.2012**
(21) Application number: 07848720.4
(22) Date of filing: 17.12.2007
(51) Int. Cl.: E02D 29/02

(54) **GABION DEPLOYMENT**
GABIONEINSATZ
DÉPLOIEMENT DE GABION

(30) Priority: 02.01.2007 GB 0700001
(43) Date of publication of application: 16.09.2009
(73) Proprietor: Hesco Bastion Limited, Cross Green Industrial Estate Leeds LS9 0NP (GB)
(72) Inventor: HESELDEN, James, Leeds, Yorkshire LS25 8ES (GB)
(74) Representative: Brand, Thomas Louis
(86) International application number: PCT/GB2007/050760
(87) International publication number: WO 2008/081177

(56) References cited:
- EP-A- 0 816 572
- GB-A- 2 423 107
- US-A- 5 636 938

## Description

This invention relates to gabion deployment and in particular to improvements in and relating to storing and/or deploying gabions, as generally known from EP 0816572 A2.

Gabions are generally structures of the type which comprises side wall panels, end panels and partition panels which connect the wall panels, and all the panels are usually rectangular and may be pivotally attached, connected together so that the structure can be moved between an expanded (or deployed) condition for use and a collapsed (or folded) condition for storage and transport. In the deployed condition, the structure is elongated and the panels define a row of cavities extending in the length direction of the structure, each cavity being defined by side panels and partition panels, apart from the end cavities which are defined by side panels, partition panels and end panels. These cavities can be filled with ballast or building materials so that the structure turns into a robust wall which can be used for defences for flooding, for military equipment and personnel, and for shoring of hillsides and river banks and the like, or simply as a property or other boundary. They can be used side-by-side, end-to-end or in superimposed relationship, depending upon the use to which they are to be put.

In the folded condition, the structure is basically flat and the partition and end panels lie in parallel planes, whilst the side panels of each side are folded one relative to another in zig-zag or concertina fashion, so that the plan footprint of the collapsed structure is rectangular.

It is to be mentioned that when reference is made to "rectangular" herein, square, which is one form of rectangle, is specifically to be included.

An example of a structure of the type set forth is illustrated in European Patent No. 0 466 726 B1 in Figures 1 and 2 thereof, and an accompanying description is also included in that Patent.

Gabions have been used throughout the world for many different uses, and often in situations where rapid deployment (to prevent flooding, or protect against hostile forces, for example) is necessary. One advantage of the pivotally attached, connected multi-compartmental gabions described in EP-B-0466726 is that they can be easily and quickly erected, and can be filled with readily available and inexpensive material, especially in those embodiments, as described in said European Patent, where the panels are of mesh and have a lining material of geo textile to prevent particles of the filling material from falling through the holes of the mesh. This mesh and lining material construction is the preferred form for the present invention, but the invention is not limited to this particular form.

Heretofore, gabions have been supplied on pallets and in stacks, often wrapped in shrink wrap plastics material. Whilst this has been satisfactory and will we believe continue to be satisfactory especially for smaller sizes of gabion, with the larger gabions, the removal of the shrink wrapping, the removal of the gabion from the pallet takes time, and in emergency situations, time is of the essence, and the more time which can be saved in erecting defence walls, the better.

This invention seeks to achieve an improvement in this area, and to provide a means whereby the erection of gabions from the collapsed folded to the deployed condition can be achieved quickly and efficiently without the disadvantages of the present methods.

Accordingly, a first aspect of the invention provides a container suitable for storing a folded gabion and from which the gabion can be deployed, the container comprising a base, at least one side wall and a roof, the container having a retaining means disposed therein in, on or to which a folded gabion can be releasably attached, connected or retentively engaged by way of at least one releasable attaching, connecting or retentive engaging means; wherein the at least one releasable attaching, connecting or retentive engaging means is adapted to attach, connect or retentively engage a part of the gabion to the retaining means when the gabion is folded but to release the gabion from the retaining means when the gabion is deployed.

A second aspect of the invention provides a gabion of the type comprising: hingedly attached, connected sidewalls and cross-members such that it can be folded for storage and deployed for use; and at least one releasable attaching, connecting or retentive engaging means suitable for attaching, connecting or retentive engaging the gabion to a retaining means; wherein the at least one releasable attaching, connecting or retentive engaging means is adapted to attach, connect or retentively engage a part of the gabion to the retaining means when the gabion is folded but to release the gabion from the retaining means when the gabion is deployed.

A third aspect of the invention provides a gabion deployment system comprising: a container for retaining a gabion and a gabion of the folding type comprising hingedly attached, connected sidewalls and cross-members such that it can be folded for storage and deployed for use; a retaining means associated with the container for retaining the gabion in the container; and at least one releasable attaching, connecting or retentive engaging means for attaching, connecting or retentive engaging at least one part of the gabion to the retaining means; wherein the at least one releasable attaching, connecting or retentive engaging means is adapted to attach, connect or retentively engage a part of the gabion to the retaining means when the gabion is folded but to release the gabion from the retaining means when the gabion is deployed.

The container can be of any suitable type, although it is envisaged that it will comprise a base, a plurality of side walls, a roof defining a cavity within which a folded gabion can be stored. Preferably, the container has a closable opening, e.g. one or more doors. The doors, where provided are preferably lockable. The container is preferably manufactured of tough and/or strong and/or durable materials (e.g. metal or plastics). A preferred embodiment of the container has external formations thereon that enable it to be secured to surfaces, such as protrusions or apertures that are mutually engageable with corresponding apertures or protrusions of the surface, respectively. Formations may also be provided on the container to enable it to be hoisted and/or manoeuvred using a crane or other plant.

A most preferred embodiment sees the container being of a type suitable for loading onto a ship and/or vehicular trailer.

The roof of the container may be selected to have a retaining means disposed on the intended underside thereof to which a folded gabion can be attached, connected or retentively engaged. Alternatively, or as well, the or each side wall of the container may be selected to have a retaining means disposed on the intended inside thereof to which a folded gabion can be attached connected or retentively engaged. Alternatively, or as well, the base of the container may be selected to have a retaining means disposed on the intended upside thereof to which a folded gabion can be attached, connected or retentively engaged. Preferably, however, the container is provided with the said retaining means in its roof and/or in the upper section of its side wall(s). The retaining means may comprise hooks or eyes or any other suitable form of mechanical restraint. Preferably, however, the retaining means comprises an elongate member, such as a bar or cable, to which parts of the gabion can be slidably attached, connected or retentively engaged. The retaining means may extend the entire length of the container. Additionally, the retaining means may be adapted to retractably extend beyond a periphery of the container (i.e. out through a door or opening therein) such that a part of the gabion can be retained whilst outside the container.

In one particularly preferred embodiment, the retaining means comprises a series of protuberances, which may be tooth-like, a gap between two protuberances accommodating in use of the stored gabion the edge section of one or more folded compartments of the multicompartmental gabion. The material of the protuberances may be selected to have a somewhat elastic characteristic so that on the application of a towing force for example to remove the folded gabion from the container, the protuberances are able to yield sufficiently to release the edge section from the gap. It is envisaged that, for example, when a multicompartmental gabion comprises ten compartments, the folded gabion will be stored/shipped in a container provided with ten protuberances, a first protuberance being situated between the entrance of the container and the first gabion compartment, a second protuberance being situated between first and second gabion compartments, with the edge section of the first gabion compartment extending into the gap between the first and second protuberances, a third protuberance being situated between second and third gabion compartments, with the edge section of the second gabion compartment extending into the gap between the second and third protuberances, and so on until a tenth protuberance is situated between ninth and tenth gabion compartments, with the edge section of the ninth gabion compartment extending into the gap between the ninth and tenth protuberances. However, it should be emphasised that this is by way of example only, and it may not be necessary to provide as many protuberances as there are gabion compartments, it being satisfactory for example in some cases to restrain only the first or first few gabion compartments. It may also be possible in some cases to accommodate more than one (two, or three for example) folded gabion compartment edge sections between a pair of protuberances.

In a particularly preferred version of this last embodiment, the protuberances may themselves be attached, connected together by means of a guide line or rod (such as a wire for example) which serves while attached, connected to restrain the protuberances in a substantially non-yielding orientation (by which is preferably meant sufficiently non-yielding so as not to release a folded gabion compartment edge section until removal of the guide line or rod). In this embodiment, only when the guide line is removed from a protuberance can the protuberance in question then yield to release a folded gabion compartment edge section. When the gabion is to be shipped or stored, the guide line is retained in place. When the gabion is to be deployed the guide line is first removed, or is removed simultaneously or sequentially on deployment. The guide line may additionally be operatively attached, connected to the folded gabion it self. In one embodiment the guide line may be passed through the protuberances (themselves provided with suitable orifices or connecting means for the purpose) towards the front (non-entrance) end of the container, around a pulley and then threaded back towards the back (entrance) end of the container through the folded gabion (or through suitable orifices or connecting means provided for the purpose) and secured to the gabion at or towards the gabion first compartment situated at or towards the back (entrance) end of the container. By this mechanism the guide line may be sequentially removed from the protuberances (beginning with the first, back end, protuberance) when the gabion is removed from the container.

Thus, one embodiment of the invention provides a container suitable for storing a folded gabion and from which the gabion can be deployed, the container comprising a base, at least one side wall and a roof, the container having a retaining means disposed therein in, on or to which a folded gabion can be releasably attached, connected or retentively engaged by way of at least one releasable attaching, connecting or retentive engaging means; wherein the at least one releasable attaching, connecting or retentive engaging means is adapted to attach, connect or retentively engage a part of the gabion to the retaining means when the gabion is folded but to release the gabion from the retaining means when the gabion is deployed, wherein the retaining means comprises a series of protuberances and the releasable attaching, connecting or retentive engaging means comprises folded gabion compartment edge sections.

It will be appreciated that the protuberances may be provided on any one (or more) of the roof, floor or side wall(s) of the container. Preferably however, they are provided in the roof or in an upper section of the side wall(s).

Alternative mechanism of releasable engagement wherein the gabion on deployment is subjected to a camming action by the retaining means may also be envisaged.

The retaining means may in certain embodiments comprise a comb-like structure, with a first comb tine or comb tine pair retentively engaging a first folded gabion compartment and a second comb tine or comb tine pair retentively engaging a second gabion compartment.

The at least one releasable attaching, connecting or retentive engaging means can be of any suitable type. It is anticipated that suitable releasable attaching, connecting or retentive engaging means may comprise, amongst others:
- A folded gabion compartment edge section
- A frangible loop or ring
- A frangible part of the gabion
- A deformable, helical member;
- A releasable line; and
- A clip.

Where the releasable attaching, connecting or retentive engaging means is frangible, a point of weakness, such as a notch or groove may be provided to encourage the attaching connecting or retentive engaging means to break at encourage the attaching, connecting or retentive engaging means to break at a predetermined position and/or load.

Any suitable type of clip may be used, such as a karabiner-type clip or a sprung-cam type clip.

The at least one releasable attaching, connecting or retentive engaging means is adapted to attach, connect or retentively engage a part of the gabion to the retaining means when the gabion is folded but to release the gabion from the retaining means when the gabion is deployed. As has been seen, the retaining means of the container may be designed so that the releasable attaching, connecting or retentive engaging means is provided by the gabion itself, or by a section thereof. In this sense the attaching, connecting or retentive engaging means is releasable in the sense that it is capable of being released from the retaining means. In other embodiments the attaching, connecting or retentive engaging means may also or instead be releasable from the gabion itself.

The releasable attaching, connecting or retentive engaging means is preferably adapted to break (where is frangible), disconnect (where it is a clip), or deform (where it is deformable) at a predetermined load, or to break or deform the retaining means of the container at a predetermined load. The predetermined load may be selected to correspond substantially with the weight of a part of the gabion. In one possible embodiment of the invention, the releasable attaching, connecting or retentive engaging means is adapted to break and/or release a part of the gabion when loaded by the weight of a part of the gabion and an additional force (e.g. hand or machine-assisted pulling).
Figure 1 shows a schematic view of a prior art single unit gabion;
Figure 2 shows a schematic view of a prior art multiple unit gabion in a folded configuration;
Figure 3 shows a schematic view of a prior art multiple unit gabion in a deployed configuration;
Figure 4 shows a schematic prior art container gabion deployment system;
Figures 5a, 5b, 5c, 6 and 7 show schematic container gabion deployment systems according to the invention;
Figures 8, 9 and 10 show side views of ring-type releasable attaching, connecting or retentive engaging means:
Figure 11 shows a side view of a clip-type releasable attaching, connecting or retentive engaging means showing certain hidden lines;
Figures 12 and 13 show schematic container gabion deployment systems according to the invention.

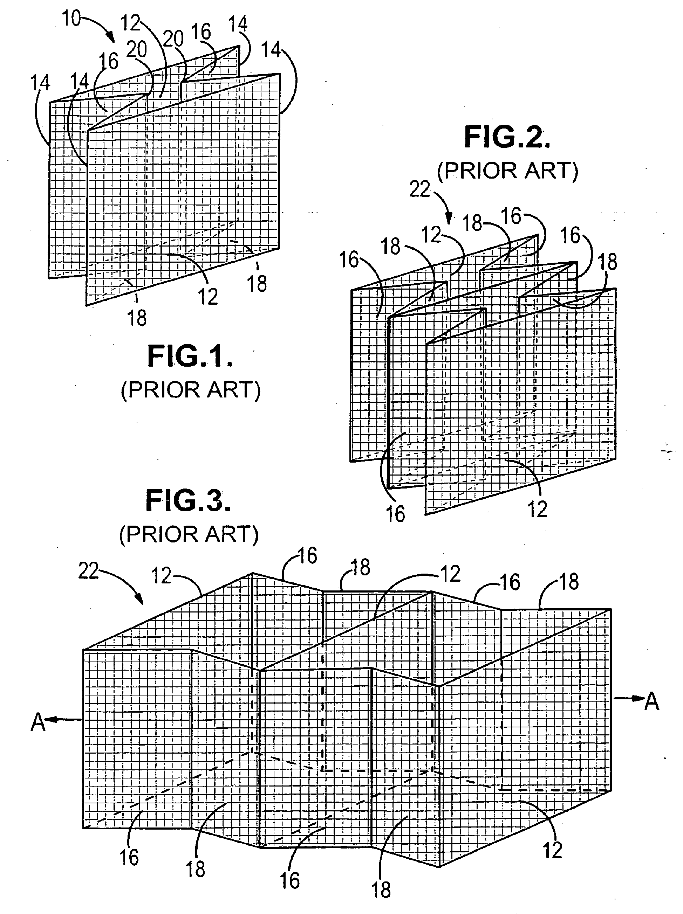

Turning now to the drawings, Figure 1 shows a schematic view of a prior art single unit gabion 10, which comprises a pair of spaced-apart end walls 12 that are hingedly 14 connected to side walls. The side walls comprise two panels each 16 and 18 that are hingedly connected to one another 20 as well as to the end walls 14. Alternative gabion designs suitable for use with the present invention comprise single-panel side walls. Side walls comprising more than two panels are also contemplated within the scope of the invention. Each wall 12, 16 & 18 is constructed from a wire mesh. The hinge connections 14 & 20 are typically helical wire members that engage corresponding edge wires of adjacent walls 12, 16 & 18. The hinges 14 & 20 are sometimes separable from the walls 12, 16 & 18 (for which see our previous application GB0424321.8). Different configurations are possible, such as providing side walls constructed from substantially closed panels rather than mesh panels.

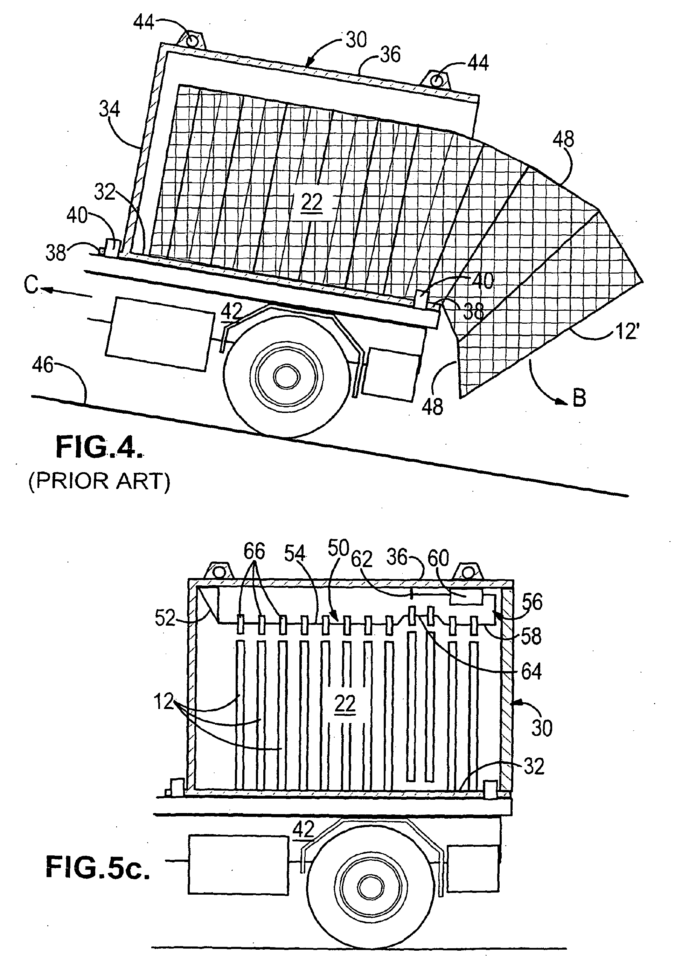

Turning now to Figures 2 and 4, a prior art multiple-unit gabion is shown 22. The construction is similar to that shown in Figure 1, with side walls 16 & 18 and an end wall 12 constituting a repeat unit that can be added as many times as necessary to produce a gabion 22 of desired length.

The gabion 22 can be stored in a folded configuration (Figure 2) and extended to a deployed configuration (Figure 3) by applying a tensile force as indicated by Arrows A. Conversely, the gabion 22 can be folded by applying a compressive force in the opposite sense to Arrows A.

Once deployed, a gabion can be filled with any suitable material (e.g. rocks, sad, earth, ice etc) to produce a wall-type structure. Gabions generally have a liner (not shown) made of a sheet material to inhibit egress of filling material through the holes in the mesh.

In Figures 4, 5, 6 and 7, a gabion 22 is represented by showing only a succession of end walls 12 for clarity. The side walls are represented by dotted lines, which show that the end walls 12 are attached, connected to one another.

One convenient way of transporting gabions 22 is in containers as illustrated by Figure 4. A container 30 generally comprises a base 32, side and end walls 34 and a roof 36. The base 32 has apertures tabs 38 that engage with pins 40 provided (in this case) on a lorry 42. The container 30 has eyelets 44 to enable it to be loaded onto and off the lorry 42 using a crane (not shown).

The gabion 22 is deployed by pulling on the first end wall 12' as indicated by Arrow B such that the gabion extends, usually in a unit-by-unit manner. The pull B can be effected by pulling on the end wall 12', holding the end wall 12' and driving the lorry in the direction indicated by Arrow C or a combination of both.

A major problem with transporting and deploying gabions 22 in this manner is that when the gabion 22 is to be deployed on inclined ground 46, there is a tendency for the gabion 22 to topple out of the container 30. Because the various parts of the gabion 22 are attached, connected to one another 48, once it has begun toppling, a large part, if not all of the gabion 22 is likely to spill out onto the ground behind the lorry 42. This can be extremely hazardous to persons nearby. A further problem is that the gabion 22 can become tangled or break, which can be inefficient, wasteful, and time-consuming to rectify.

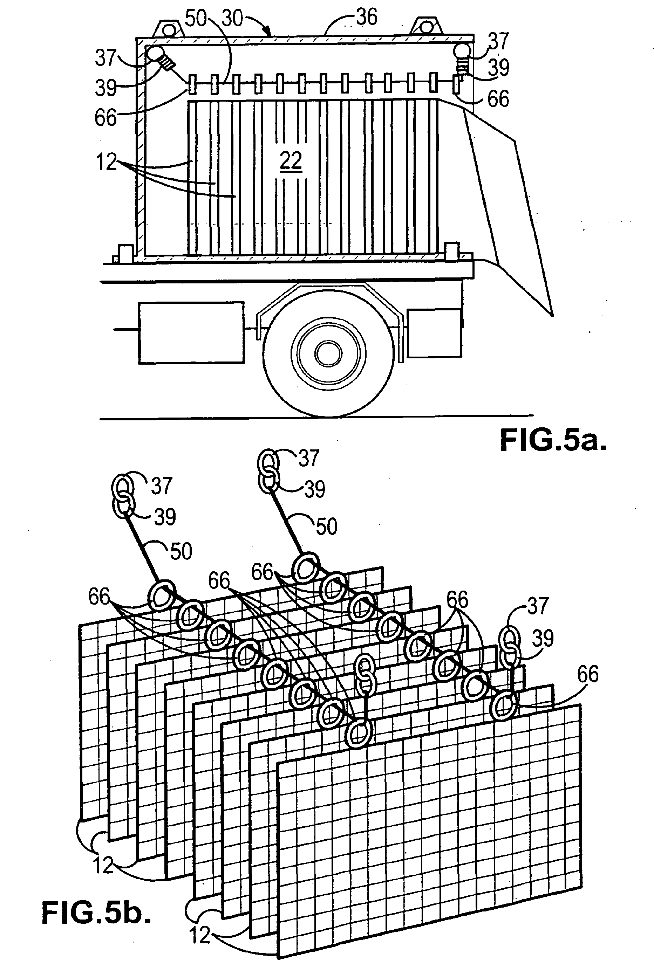

Various versions of the invention are illustrated in Figures 5 to 13 of the drawings.

A preferred embodiment of the invention is shown in Figures 5a to 5c. In Figure 5a, a container 30 is shown having a roof 36. From opposite ends of the underside of the roof 36 depend eyelets 37 to which a retaining means in the form of a retaining cable 50 is attached, connected by way of snap hooks 39. End walls 12 of the gabion 22 are attached, connected to the retaining cable 50 by way of discontinuous rings 66.

The retaining cable 50 prevents the gabion 20 from spilling out of the container 30 without the attaching, connecting or retentive engaging rings 66 first being broken or deformed.

In Figure 5b it can be seen that each end wall is provided with a pair of attaching, connecting or retentive engaging rings 66 for attaching, connecting or retentive engaging to a pair of spaced-apart and substantially parallel retaining cables 50.

It is possible to provide non-parallel support cables 50 such that the gabion 22 becomes more difficult to slide therealong as it approaches the door of the container 30.

It is envisaged that the gabion 22 will be factory-assembled, provided with attaching, connecting or retentive engaging rings 66 and folded. One or more support cables 50 could then be threaded through the attaching, connecting or retentive engaging rings 66 and clip fasteners 39 attached, connected or retentively engaged to ends of the cable or cables 50. The gabion 22 could then be loaded into a container 30 and the clip fasteners 39 attached connected or retentively engaged to roof eyelets 37.

In Figure 5c, the container 30 has a retaining means 50 disposed on the underside of the roof 36. The retaining means comprises an attachment 52 to which a retaining cable 54 is attached connected or retentively engaged. An extendible/retractable attachment 56 is attached, connected or retentively engaged to the other end of the retaining cable 54: The extendible/retractable attachment 56 comprises a support bar 58 that is slidably engageable with a sheath 60. An end-stop 62 is provided to prevent the support bar from sliding beyond a desired extent. The support bar 58 depends from the sheath 60 and has an undulation 64 therein to inhibit movement of the gabion 22 therealong.

Associated with each end wall 12 of the gabion 22 is a releasable attaching, connecting or retentive engaging means 66 that connects respective end walls 12 of the gabion 22 to either the retaining cable 54 or the support bar 58. The height of the retaining cable 54 and support bar 58 is such that the majority of the weight of the gabion 22 is supported by the floor of the container.

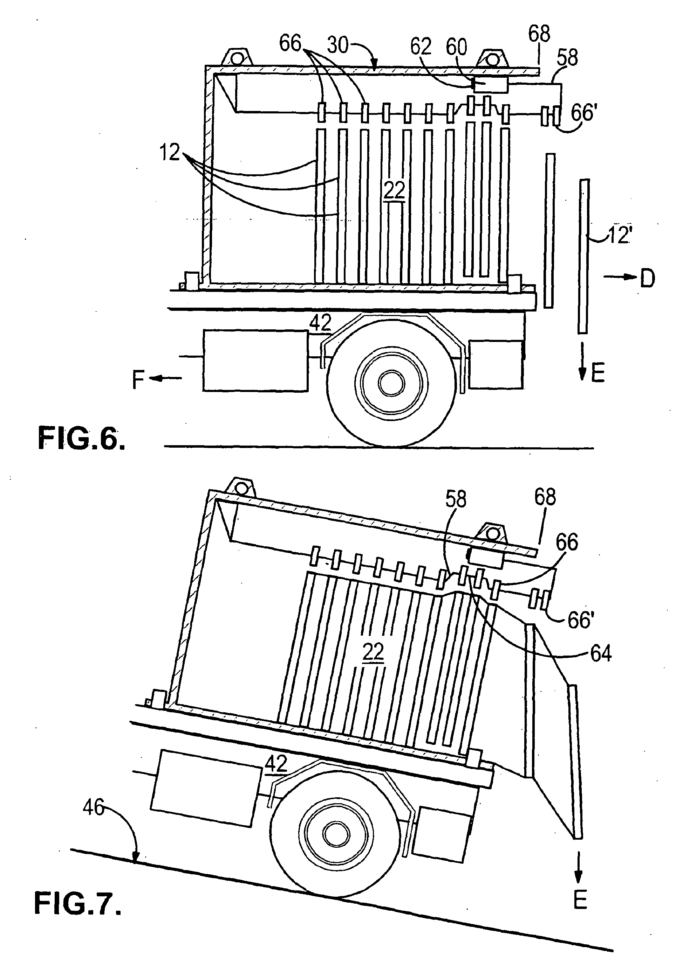

In use, as illustrated by Figure 6, the door of the container 30 is opened and the first end wall 12' of the gabion 22 pulled in the direction indicated by Arrow D. The support bar 58 slides beyond the periphery 68 of the container 30 such that a part of the gabion 22 is suspended beyond the periphery 68. The support bar 58 is prevented from disengaging the sheath 60 by virtue of the end-stop 62.

The releasable attaching, connecting or retentive engaging means 66 can be configured to disconnect 66' under the weight of a part of the gabion or to disconnect when an additional force E is applied thereto. Thus, the gabion 22 can be deployed unit-by-unit by a user (not shown) by first pulling a desired number of units out D, then pulling down E to release a desired number of units of the gabion 22. If the releasable attaching, connecting or retentive engaging means 66 are configured to disconnect under just the weight of the gabion 22, then the user need only pull the first unit out D and the rest will follow if the lorry 42 is advanced F.

Figure 7 shows how the gabion neither deploys nor spills out of the container 30 when the lorry 42 is on inclined ground 46. The releasable attaching, connecting or retentive engaging means 66 are configured to support the weight of the gabion 22 thereby preventing it from spilling out unless an additional force E is applied. Furthermore, the undulation 64 in the support bar 58 limits the number of gabion units that advance beyond the periphery of the container 30, thereby limiting the load on the releasable attaching, connecting or retentive engaging means 66 to prevent additional forces E from being applied thereto.

An alternative embodiment of the invention sees the retaining means dispensing with the attachment 52 and extendible/retractable attachment 56, and having only a retaining cable 54. A pulley/spring/tensioning mechanism may be associated with the retaining cable to maintain it at a desired tension.

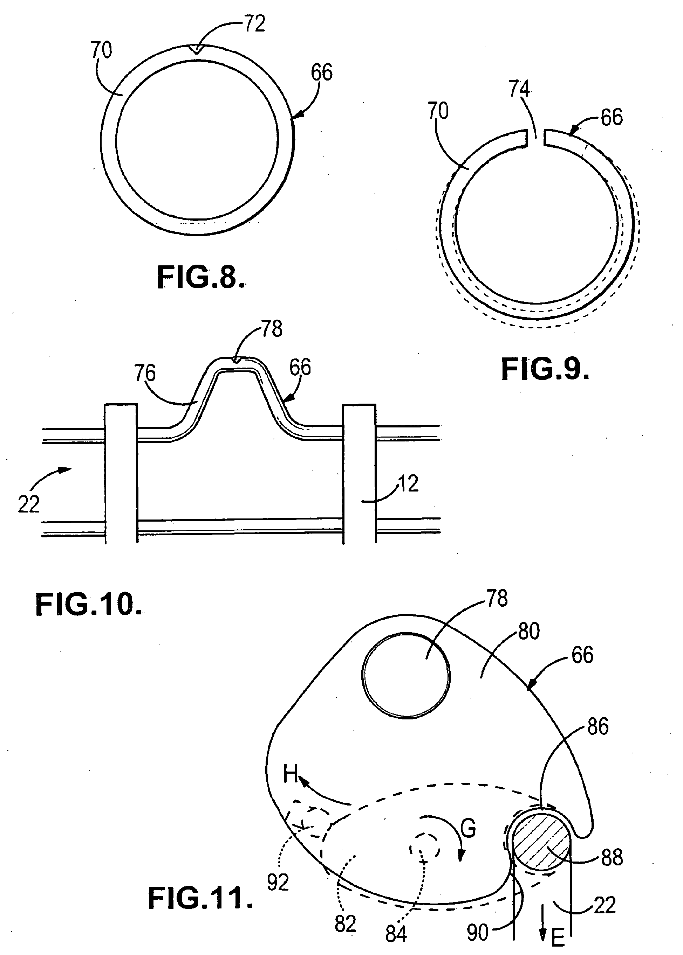

Turning now to Figures 8 to 11, various possible types of releasable attaching, connecting or retentive engaging means 66 are shown.

In Figure 8, the releasable attaching, connecting or retentive engaging means 66 comprises a metal ring 70 having a notch 72 therein. The notch is configured such that it causes the ring 70 to break when a predetermined hoop-stress therein is attained.

In Figure 9, a metal ring 70 is shown having a discontinuity 74 therein. Upon application of a force, the ring 70 deforms and the discontinuity 74 enlarges (as indicated by the dotted line) causing the gabion to be released from the retaining means.

In Figure 10, the end wall 12 of the gabion 22 has a loop 76 formed integrally therewith through which a retaining cable or the like can be threaded. The loop 76 has a point of weakness 78 therein (in this case a notch) such that the loop 76 breaks under a predetermined load. The loop 76 could be formed integrally with any part of the gabion 22, such as a side wall 16, 18 or a hinge 14,20.

Figure 11 shows a releasable attaching, connecting or retentive engaging means 66 in the form of a camming member. An aperture 78 is provided in the body 80 thereof through which a retaining cable/bar/rod can be threaded. A cam member 82 is provided that is pivotally mounted within the body 80 about a pivot 84. One side of the cam member 82 has a cut-out 86 for receiving a part 88 of a gabion 22. The part 88 of the gabion 22 is retained by the corresponding cam member cut-out 86 and a cut-out 90 in the body 80. The cam member 82 is held in-situ by a sprung ball-bearing 92.

When an excessive load E is applied to the gabion 22, the cam member 82 rotates G and the sprung ball-bearing 92 is depressed H. The cam member 82 eventually over-centres, and the cam member cut-out 86 no longer coincides with the body cut-out 90 thereby releasing the part 88 of the gabion 22. The force E required to cause disconnection of the gabion from the releasable attaching, connecting or retentive engaging means 66 can be configured by adjusting the compressive force applied by the sprung ball-bearing 92 to the cam member 82.

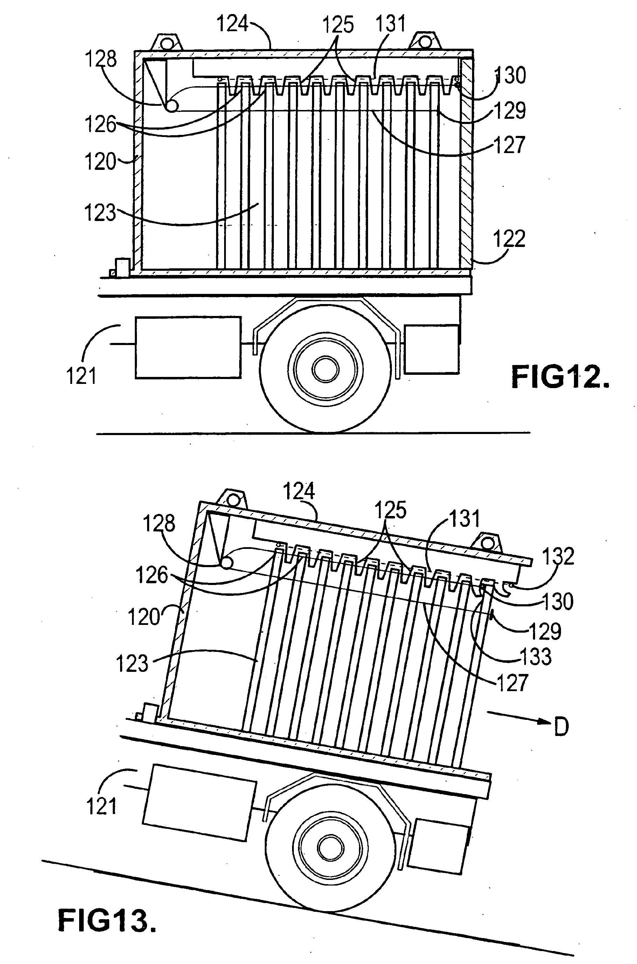

Figure 12 shows a gabion-deployment system in which a cargo container 120 is mounted on the back of a lorry 121 for transportation purposes. In Figure 12 the container is in transit and the back doors 122 of the container are closed. Inside the container is stored a multicompartmental gabion 123 of the type described in EP-B-0466726, PCT/GB2006/050367 or PCT/GB2006/050256, for example, or a security barrier of the type described in PCT/GB2007/050450. In the depicted embodiment the multicompartmental gabion or security barrier has ten compartments, each of which (in its folded configuration) is represented by a single line in Figures 12 and 13. Although the individual gabion compartments are pivotally interconnected, no such interconnection is shown in the drawings, for simplicity therein.

Mounted on the underside of roof 124 of container 120 is a retaining means comprising a row of protruding teeth 125, each of which in the embodiment shown extends into the region between neighbouring folded gabion compartment edge sections 126, retentively engaging the said sections. Teeth 125 are formed of a material such as rubber having an elastic character so that the teeth are able to flex from side to side. However, in this embodiment there is also provided a guide wire 127 which is threadedly engaged with edge sections 126 and which passes around pulley 128 and back through the individual teeth 125 of the restraining means, by means of suitable orifices (not shown) provided in the said teeth, or each of them. The guide wire is secured at one end to first gabion compartment 129, and at its opposite end is provided with a bulbous portion 130 which can only be passed through the guide line orifice of an individual tooth 125 on the application of some considerable force, of the order which would result from the first gabion compartment being pulled (usually by mechanical means) from the container once the doors are opened.

The retaining means may additionally be provided with a stiffening rod passing through a second set of orifices in the tooth members and serving to limit the possible flexural movement of teeth 125 to provide extra strength and stability to the retaining means, and enhancing its retentive effect on the folded gabion compartment edge sections. The stiffening rod is indicated by dotted line 131 in Figures 12 and 13, and is optionally provided.

As shown in Figure 13, when the container doors are opened the first gabion compartment may be pulled (by means of a tow truck for example, or manually) in the direction indicated by arrow D. Guide wire 127 is pulled at the same time and bulbous portion 130 is forced through the orifice of the first tooth 132. First folded gabion compartment edge section 133 then bears against tooth 132 causing it to flex and release the first compartment from the container. Continued towing causes repetition of this process in relation to the second and subsequent compartments, allowing the gabion to be deployed quickly but safely, even on an incline as shown in Figure 13.

## Claims

1. A container (30) suitable for storing a folded gabion (48) and from which the gabion can be deployed, the container comprising a base, at least one side wall and a roof, the container having a retaining means (52) disposed therein in, on or to which a folded gabion can be releasably attached, connected or retentively engaged by way of at least one releasable attaching, connecting or retentive engaging means; wherein the at least one releasable attaching (64), connecting or retentive engaging means is adapted to attach, connect or retentively engage a part of the gabion to the retaining means when the gabion is folded but to release the gabion from the retaining means when the gabion is deployed.

2. A gabion (48) of the type comprising: hingedly attached, connected sidewalls and cross-members such that it can be folded for storage and deployed for use; and at least one releasable attaching, connecting or retentive engaging means suitable for attaching, connecting or retentive engaging the gabion to a retaining means; wherein the at least one releasable attaching, connecting or retentive engaging means (66) is adapted to attach, connect or retentively engage a part of the gabion to the retaining means when the gabion is folded but to release the gabion from the retaining means when the gabion is deployed.

3. A gabion (48) deployment system comprising: a container (30) for retaining a gabion (48) and a gabion of the folding type comprising hingedly attached, connected sidewalls and cross-members such that it can be folded for storage and deployed for use; a retaining means associated with the container for retaining the gabion in the container; and at least one releasable attaching, connecting or retentive engaging means for attaching, connecting or retentive engaging at least one part of the gabion to the retaining means; wherein the at least one releasable attaching, connecting or retentive engaging means is adapted to attach, connect or retentively engage a part of the gabion to the retaining means when the gabion is folded but to release the gabion from the retaining means when the gabion is deployed.

4. A container, gabion or gabion deployment system as claimed in any one of claims 1 to 3, wherein the container is suitable for loading onto a ship and/or vehicular trailer.

5. A container, gabion or gabion deployment system as claimed in any one of claims 1 to 4, wherein the roof of the container has a retaining means disposed on the intended underside thereof.

6. A container, gabion or gabion deployment system as claimed in any one of claims 1 to 5, wherein the retaining means comprises one or more hooks, eyes, or tooth-like protuberances.

7. A container, gabion or gabion deployment system as claimed in any one of claims 1 to 4, wherein the retaining means comprises one or more elongate members (50).

8. A container, gabion or gabion deployment system as claimed in claim 7, wherein the one or more elongate members (50) comprises a bar, rod or cable.

9. A container, gabion or gabion deployment system as claimed in any one of claims 7 or 8, wherein the retaining means (50) extends along substantially the entire length of the container.

10. A container, gabion or gabion deployment system as claimed in any one of claims 7, 8 or 9, wherein the retaining means (50) is retractably extendable beyond a periphery of the container.

11. A container, gabion or gabion deployment system as claimed in any of claims 1 to 10, wherein the at least one releasable attaching, connecting or retentive engaging means is one of the group comprising: a folded gabion compartment edge section; a frangible loop; a frangible ring; a frangible part of the gabion; a deformable member; a helical member; and a clip (80).

12. A container, gabion or gabion deployment system as claimed in claim 11, wherein the loop, frangible ring or frangible part of the gabion has a point of weakness to encourage the attaching, connecting or retentive engaging means to break at a predetermined position and/or load.

13. A container, gabion or gabion deployment system as claimed in claim 11, wherein the clip (80) is a karabiner-type clip or a sprung-can type clip.

14. A container, gabion or gabion deployment system as claimed in any of claims 1 to 13, wherein the releasable attaching, connecting or retentive engaging means is adapted to release at a predetermined load.

15. A container, gabion or gabion deployment system as claimed in claim 14, wherein the predetermine load corresponds substantially with the weight of a part of the gabion (48), or with a towing force applied to the gabion.

16. A container, gabion or gabion deployment system as claimed in any one of claims 1 to 15, wherein the releasable attaching, connecting or retentive engaging means (50) is formed integrally with the gabion (48).

17. A gabion deployment system comprising a container (30) of substantially oblong cross section loaded with folded gabion of the type comprising hingedly attached, connected side walls and cross-members, a retaining means in the form of a fastening line running substantially along the length of the container and attaching, connecting or retentively engaging with the folded gabion periodically along its length by means of releasable attaching, connecting or retentive engaging means, whereby the cross-members lie substantially parallel to the end of the container and the gabion can be removed from the container by pulling the gabion from the container using an end cross-member which is presented when the container is opened, or by pulling the container whilst holding said end cross-member, or by pulling the container whilst pulling said end-member, the weight of a first withdrawn unit of the gabion causing disconnection of a first releasable attaching, connecting or retentive engaging means and the weight of subsequently withdrawn units of the gabion causing disconnection of subsequent releasable attaching, connecting or retentive engaging means, the gabion being moved to a deployed condition on withdrawal from the container and the releasable attaching, connecting or retentive engaging means inhibiting withdrawal from the container of the subsequently withdrawn units of the gabion before effective deployment of the first withdrawn unit.

18. A container, gabion or gabion deployment system as claimed in any one of claims 1 to 17, wherein the floor of the container substantially corresponds to the footprint of the gabion.

19. A container, gabion or gabion deployment system as claimed in any one of claims 1 to 17, wherein the end wall of the gabion substantially corresponds to the cross-section of the container.

20. A container, gabion or gabion deployment system as claimed in either of claims 18 or 19, wherein the correspondence between the interior dimensions of the container and the dimensions of the folded gabion is such that the folded gabion is substantially restrained from movement by the container walls.

21. A container, gabion or gabion deployment system according to any one of claims 1 to 20 wherein the retaining means comprises a series of protuberances, a gap between two protuberances accommodating in use of the stored gabion the edge section of one or more folded compartments of the multicompartmental gabion.

22. A container, gabion or gabion deployment system according to claim 21 wherein the material of the protuberances is selected to have an elastic characteristic.

23. A container, gabion or gabion deployment system according to claim 22 wherein on the application of a towing force to remove the folded gabion from the container, the protuberances are able to yield sufficiently to release the edge section from the gap.

24. A container, gabion or gabion deployment system according to any one of claims 21 to 23 wherein the protuberances are themselves connected together by means of a guide line or rod which serves while connected to restrain the protuberances in a substantially non-yielding orientation

25. A container, gabion or gabion deployment system according to claim 24 wherein only when the guide line is removed from a protuberance can the protuberance in question then yield to release a folded gabion compartment edge section.

26. A container, gabion or gabion deployment system according to claim 24 or claim 25 wherein the guide line is additionally operatively connected to the folded gabion it self.

27. A container, gabion or gabion deployment system according to claim 26 wherein the guide line is passed through the protuberances, themselves provided with suitable orifices or connecting means for the purpose, towards the front, non-entrance, end of the container, around a pulley and then threaded back towards the back, entrance, end of the container through the folded gabion, or through suitable orifices or connecting means provided for the purpose, and secured to the gabion at or towards the gabion first compartment situated at or towards the back, entrance, end of the container.

28. A container suitable for storing a folded gabion and from which the gabion can be deployed, the container comprising a base, at least one side wall and a roof, the container having a retaining means disposed therein in, on or to which a folded gabion can be releasably attached, connected or retentively engaged by way of at least one releasable attaching, connecting or retentive engaging means; wherein the at least one releasable attaching, connecting or retentive engaging means is adapted to attach, connect or retentively engage a part of the gabion to the retaining means when the gabion is folded but to release the gabion from the retaining means when the gabion is deployed, wherein the retaining means comprises a series of protuberances and the releasable attaching, connecting or retentive engaging means comprises folded gabion compartment edge sections.

29. A container suitable for storing a folded multicompartmental gabion or security barrier, the container comprising a base, at least one side wall and a roof, the roof or an upper portion of the container having a retaining means comprising a comb structure, with a first comb tine or comb tine pair retentively engaging a first folded gabion or security barrier compartment or wall and a second comb tine or comb tine pair retentively engaging a second gabion or security barrier compartment or wall.

## Patentansprüche

1. Behälter (30), der zum Lagern einer zusammengefalteten Gabione (48) geeignet ist und aus dem die Gabione entfaltet werden kann, wobei der Behälter einen Boden, mindestens eine Seitenwand und ein Dach aufweist, und der Behälter ein in demselben angeordnetes Haltemittel (52) aufweist, in, auf oder an dem eine zusammengefaltete Gabione mittels mindestens eines lösbar befestigenden, verbindenden oder haltend ergreifenden Mittels lösbar befestigt, verbunden oder haltend ergriffen werden kann; wobei das mindestens eine lösbar befestigende (64), verbindende oder haltend ergreifende Mittel eingerichtet ist, um einen Teil der Gabione an dem Haltemittel zu befestigen, mit diesem zu verbinden oder durch dieses haltend zu ergreifen, wenn die Gabione zusammengefaltet wird, die Gabione jedoch von dem Haltemittel zu lösen, wenn die Gabione entfaltet wird.

2. Gabions (48) des Typs, der Folgendes aufweist: schwenkbar befestigte, verbundene Seitenwände und Querelemente, so dass sie zur Lagerung zusammengefaltet und zum Gebrauch entfaltet werden kann; und mindestens ein lösbar befestigendes, verbindendes oder haltend ergreifendes Mittel, das zum Befestigen an, Verbinden mit oder haltenden Ergreifen der Gabione an einem Haltemittel geeignet ist; wobei das mindestens eine lösbar befestigende, verbindende oder haltend ergreifende Mittel (66) eingerichtet ist, um einen Teil der Gabione an dem Haltemittel zu befestigen, mit diesem zu verbinden oder durch dieses haltend zu ergreifen, wenn die Gabione zusammengefaltet ist, die Gabione jedoch von dem Haltemittel zu lösen, wenn die Gabione entfaltet wird.

3. Gabionen- (48) Entfaltungssystem, das Folgendes aufweist: einen Behälter (30): zum Halten einer Gabione (48) und eine Gabione des Falttyps, die schwenkbar befestigte, verbundene Seitenwände und Querelemente aufweist, so dass sie zur Lagerung zusammengefaltet und zum Gebrauch entfaltet werden kann; ein Haltemittel, das mit dem Behälter zum Halten der Gabione in dem Behälter verknüpft ist; und mindestens ein lösbar befestigendes, verbindendes oder haltend ergreifendes Mittel, das zum Befestigen an, Verbinden mit oder haltenden Ergreifen mindestens eines Teils der Gabione an dem Haltemittel geeignet ist; wobei das mindestens eine lösbar befestigende, verbindende oder haltend ergreifende Mittel eingerichtet ist, um einen Teil der Gabione an dem Haltemittel zu befestigen, mit diesem zu verbinden oder durch dieses haltend zu ergreifen, wenn die Gabione zusammengefaltet ist, die Gabione jedoch von dem Haltemittel zu lösen, wenn die Gabione entfaltet wird.

4. Behälter, Gabione oder Gabionen-Entfaltungssystem nach einem der Ansprüche 1 bis 3, wobei der Behälter zum Laden auf ein Schiff und/oder einen Fahrzeuganhänger geeignet ist.

5. Behälter, Gabione oder Gabionen-Entfaltungssystem nach einem der Ansprüche 1 bis 4, wobei das Dach des Behälters ein Haltemittel aufweist, das auf der vorgesehenen Unterseite desselben angeordnet ist.

6. Behälter, Gabione oder Gabionen-Entfaltungssystem nach einem der Ansprüche 1 bis 5, wobei das Haltemittel einen oder mehrere Haken, Ösen oder zahnartige Vorsprünge aufweist.

7. Behälter, Gabione oder Gabionen-Entfaltungssystem nach einem der Ansprüche 1 bis 4, wobei das Haltemittel ein oder mehrere Langelemente (50) aufweist.

8. Behälter, Gabione oder Gabionen-Entfaltungssystern nach Anspruch 7, wobei das eine oder die mehreren Langelemente (50) eine Stange, einen Stab oder ein Kabel aufweisen.

9. Behälter, Gabione oder Ciabionen-Entfaltungssystem nach einem der Ansprüche 7 oder 8, wobei das Haltemittel (50) sich im Wesentlichen über die gesamte Länge des Behälters erstreckt.

10. Behälter, Gabione oder Gabionen-Entfaltungssystem nach einem der Ansprüche 7, 8 oder 9, wobei das Haltemittel (50) einziehbar über einen Umfang des Behälters hinaus ausgezogen werden kann.

11. Behälter, Gabione oder Gabionen-Entfaltungssystem nach einem der Ansprüche 1 bis 10, wobei das mindestens eine lösbar befestigende, verbindende oder haltend ergreifende Mittel eins aus der Gruppe darstellt, die Folgendes aufweist: einen Kantenabschnitt einer zusammengefalteten Gabionenabteilung; eine zerbrechliche Schlaufe; einen zerbrechlichen Ring; einen zerbrechlichen Teil der Gabione; ein verformbares Element; ein Spiralelement; und eine Klemme (80).

12. Behälter, Gabione oder Gabionen-Entfaltungssystem nach Anspruch 11, wobei die Schlaufe, der zerbrechliche Ring oder zerbrechliche Teil der Gabione einen Schwachpunkt hat, um das befestigende, verbindende oder haltend ergreifende Mittel zu veranlassen, an einer vorbestimmten Position und/oder bei einer vorbestimmten Belastung zu zerbrechen.

13. Behälter, Gabione oder Gabionen-Entfaltungssystem nach Anspruch 11, wobei die Klemme (80) eine Klemme vom Karabinertyp oder eine Klemme vom federten Nockentyp ist.

14. Behälter, Gabione oder Gabionen-Entfaltungssystem nach einem der Ansprüche 1 bis 13, wobei das lösbar befestigende, verbindende oder haltend ergreifende Mittel eingerichtet ist, um sich bei einer vorbestimmten Belastung zu lösen.

15. Behälter, Gabione oder Gabionen-Entfaltungssystem nach Anspruch 14, wobei die vorbestimmte Belastung im Wesentlichen dem Gewicht eines Teils der Gabione (48) oder einer an die Gabione angelegten Zugkraft entspricht.

16. Behälter, Gabione oder Gabionen-Entfaltungssystem nach einem der Ansprüche 1 bis 15, wobei das lösbar befestigende, verbindende oder haltend ergreifende Mittel (50) mit der Gabione (48) integriert ausgebildet ist.

17. Gabionen-Entfaltungssystem, das Folgendes aufweist: einen Behälter (30) mit im Wesentlichen rechteckigem Querschnitt beladen mit einer zusammengefalteten Gabione des Typs, der befestigte, verbundene Seitenwände und Querelemente aufweist, ein Haltemittel in der Form einer Befestigungsleine, die im Wesentlichen entlang der Länge des Behälters verläuft und die zusammengefaltete Gabione periodisch entlang seiner Länge mittels lösbar befestigender, verbindender oder haltend ergreifender Mittel befestigt, verbindet oder haltend ergreift, wobei die Querelemente im Wesentlichen parallel zu dem Ende des Behälters liegen und die Gabione aus dem Behälter entfernt werden kann, indem die Gabione unter Verwendung eines Endquerelements aus dem Behälter gezogen wird, welches dargeboten wird, wenn der Behälter geöffnet wird, oder indem der Behälter gezogen wird, während das Endquerelement festgehalten wird, oder indem der Behälter gezogen wird, während das Element gezogen wird, wobei das Gewicht einer ersten entnommenen Einheit der Gabione Lösung eines ersten lösbar befestigenden, verbindenden oder haltend ergreifenden Mittels bewirkt und das Gewicht anschließend entnommener Einheiten der Csabione Lösung nachfolgende lösbar befestigender, verbindender oder haltend ergreifender Mittel bewirkt, und die Gabione beim Entnehmen aus dem Behälter in einen entfalteten Zustand bewegt wird, und das lösbar befestigende, verbindende oder haltend ergreifende Mittel Entnehmen der nachfolgend zu entnehmenden Einheiten der Gabione aus dem Behälter behindert, bevor die erste entnommene Einheit effektiv entfaltet ist.

18. Behälter, Gabione oder Gabionen-Entfaltungssystem nach einem der Ansprüche 1 bis 17, wobei der Boden des Behälters im Wesentlichen der Stelltläche der Gabione entspricht.

19. Behälter, Gabione oder Gabionen-Entfaltungssystem nach einem der Ansprüche 1 bis 17, bei dem die Endwand der Gabione im Wesentlichen dem Querschnitt des Behälters entspricht.

20. Behälter, Gabione oder Gabionen-Entfaltungssystem nach einem der Ansprüche 18 oder 19, bei dem die Entsprechung zwischen den Innenabmessungen des Behälters und den Abmessungen der zusammengefalteten Gabione derart ist, dass Bewegung der zusammengefalteten Gabione durch die Behälterwände im Wesentlichen eingeschränkt wird.

21. Behälter, Gabione oder Gabionen-Entfaltungssystem nach einem der Ansprüche 1 bis 20, wobei das Haltemittel eine Reihe von Vorsprüngen aufweist, und ein Spalt zwischen zwei Vorsprüngen in Gebrauch der gelagerten Gabione die Kantenabschnitte von einem oder mehreren zusammengefalteten Abteilungen der mehrere Abteilungen aufweisenden Gabione aufnimmt.

22. Behälter, Gabione oder Gabionen-Entfaltungssystem nach Anspruch 21, wobei das Material der Vorsprünge ausgewählt wird, um eine elastische Beschaffenheit aufzuweisen.

23. Behälter, Gabione oder Gabionen-Entfaltungssystem nach Anspruch 22, bei dem bei der Anwendung einer Zugkraft zum Entfernen der zusammengefalteten Gabione aus dem Behälter, die Vorsprünge ausreichend nachgeben können, um den Kantenabschnitt aus dem Spalt freizugeben.

24. Behälter, Gabione oder Gabionen-Entfaltungssystem nach einem der Ansprüche 21 bis 23, wobei die Vorsprünge selbst miteinander mittels einer Führungsleine oder eines Stabs verbunden sind, der während Verbindung dazu dient, die Vorsprünge in einer im Wesentlichen nicht nachgebenden Ausrichtung zu halten.

25. Behälter, Gabione oder Gabionen-Entfaltungssystem nach Anspruch 24, wobei nur dann, wenn die Führungsleine aus einem Vorsprung entfernt ist, der betreffende Vorsprung dann nachgeben kann, um einen Kantenabschnitt einer zusammengefalteten Gabionenabteilung zu lösen.

26. Behälter, Gabione oder Gabionen-Entfaltungssystem nach Anspruch 24 oder Anspruch 25, bei dem die Führungsleine zusätzlich operativ mit der zusammengefalteten Gabione selbst verbunden ist.

27. Behälter, Gabione oder Gabionen-Entfaltungssystem nach Anspruch 26, wobei die Führungsleine durch die Vorsprünge, die selbst mit geeigneten Öffnungen oder Verbindungsmitteln für diesen Zweck versehen sind, hindurch, in Richtung des vorderen, nicht zugänglichen Endes des Behälters, um eine Riemenscheibe herum und anschließend zurück zu dem hinteren, zugänglichen Ende des Behälters durch die zusammengefaltete Gabione oder durch geeignete Öffnungen oder zu diesem Zweck vorgesehene Verbindungsmittel geführt wird, und an der Gabione an oder in Richtung der ersten Abteilung der Gabione befestigt wird, die sich an oder in Richtung des hinteren, zugänglichen Endes des Behälters befindet.

28. Behälter, der zum Lagern einer zusammengefalteten Gabione geeignet ist und aus dem die Gabione entfaltet werden kann, wobei der Behälter einen Boden, mindestens eine Seitenwand und ein Dach aufweist, und der Behälter ein in demselben angeordnetes Haltemittel aufweist, in, auf oder an dem eine zusammengefaltete Gabione mittels mindestens eines lösbar befestigenden, verbindenden oder haltend ergreifenden Mittels lösbar befestigt, verbunden oder haltend ergriffen werden kann; wobei das mindestens eine lösbar befestigende, verbindende oder haltend ergreifende Mittel eingerichtet ist, um einen Teil der Gabione an dem Haltemittel zu befestigen, mit diesem zu verbinden oder durch dieses haltend zu ergreifen, wenn die Gabione zusammengefaltet wird, die Gabione jedoch von dem Haltemittel zu lösen, wenn die Gabione entfaltet wird, wobei das Haltemittel eine Reihe von Vorsprüngen aufweist und das lösbar befestigende, verbindende oder haltend ergreifende Mittel Kantenabschnitte einer zusammengefalteten Gabionenabteilung aufweist.

29. Behälter, der zum Lagern einer zusammengefalteten, mehrere Abteilungen aufweisenden Gabione oder einer Sicherheitsabsperrung geeignet ist, wobei der Behälter einen Boden, mindestens eine Seitenwand und ein Dach aufweist, wobei das Dach oder ein oberer Teil des Behälters ein Haltemittel aufweist, das eine Kammstrulctur aufweist, wobei eine erste Kammzinke oder ein erstes Paar von Kammzinken eine erste Abteilung oder Wand einer zusammengefalteten Gabione oder Sicherheitsabsperrurlg haltend ergreift, und eine zweite Kammzinke oder ein zweites Paar von Kammzinken eine zweite Abteilung oder Wand einer Gabione oder Sicherheitsabsperrung haltend ergreift.

## Revendications

1. Conteneur (30) apte à stocker un gabion replié (48) et à partir duquel le gabion peut être déployé, le conteneur comprenant une base, au moins un mur latéral et un toit, le conteneur étant doté d'un moyen de retenue (52) disposé à l'intérieur, dans, sur ou auquel un gabion replié peut être attaché, connecté ou enclenché pour le retenir de manière libérable par le biais d'au moins un moyen libérable d'attache, de connexion ou d'enclenchement rétenteur ; où le au moins un moyen libérable d'attache (64), de connexion ou d'enclenchement rétenteur est apte à attacher, connecter ou enclencher pour le retenir une partie du gabion au moyen de retenue quand le gabion est replié mais à libérer le gabion du moyen ' de retenue quand le gabion est déployé.

2. Gabion (48) du type comprenant : des murs latéraux et des traverses connectés, attachés par charnières, de manière à pouvoir être replié pour le stockage et déployé pour l'utilisatïon ; et au moins un moyen libérable d'attache, connexion ou enclenchement rétenteur apte à attacher, connecter ou enclencher pour le retenir le gabion à un moyen de retenue ; où le au moins un moyen libérable d'attache, connexion ou enclenchement rétenteur (66) est apte à attacher, connecter ou enclencher pour le retenir une partie du gabion au moyen de retenue quand le gabion est replié mais à libérer le gabion du moyen de retenue quand le gabion est déployé.

3. Système de déploiement de gabion (48) comprenant : un conteneur (30) pour retenir un gabion (48) et un gabion de type pliant, comprenant des murs latéraux et des traverses connectés, attachés par charnières, de manière à pouvoir être replié pour le stockage et déployé pour l'utilisatïon un moyen de retenue associé au conteneur pour retenir le gabion dans le conteneur ; et au moins un moyen libérable d'attache, connexion ou enclenchement rétenteur pour attacher, connecter ou enclencher pour le retenir au moins une partie du gabion au moyen de retenue ; où le au moins un moyen libérable d'attache, connexion ou enclenchement rétenteur est apte à attacher, connecter ou enclencher pour le retenir une partie du gabion au moyen de retenue quand le gabion est replié mais à libérer le gabion du moyen de retenue quand le gabion est déployé.

4. Conteneur, gabion ou système de déploiement de gabion conforme à une quelconque des revendications 1 à 3, où le conteneur convient à être chargé dans un navire et/ou une remorque de véhicule.

5. Conteneur, gabion ou système de déploiement de gabion conforme à une quelconque des revendications 1 à 4, où le toit du conteneur est doté d'un moyen de retenue disposé sur le dessous prévu de celui-ci.

6. Conteneur, gabion ou système de déploiement de gabion conforme à une quelconque des revendications 1 à 5, où le moyen de retenue comprend un ou plusieurs crochets, oeillets ou protubérances en forme de dent.

7. Conteneur, gabion ou système de déploiement de gabion conforme à une quelconque des revendications 1 à 4, où le moyen de retenue comprend un ou plusieurs organes allongés (50).

8. Conteneur, gabion ou système de déploiement de gabion conforme à la revendication 7, où le ou les plusieurs organes allongés (50) comprennent une barre, une tige ou un câble.

9. Conteneur, gabion ou système de déploiement de gabion conforme à une quelconque des revendications 7 ou 8, où le moyen de retenue (50) s'étend le long de sensiblement toute la longueur du conteneur

10. Conteneur, gabion ou système de déploiement de gabion conforme à une quelconque des revendications 7, 8 ou 9, où le moyen de retenue (50) peut s'étendre de manière rétractable au-delà d'une périphérie du conteneur.

11. Conteneur, gabion ou système de déploiement de gabion conforme à une quelconque des revendications 1 à 10, où le au moins un moyen libérable d'attache, de connexion ou d'enclenchement rétenteur est l'un du groupe comprenant: une section de bord de compartiment de gabion replié ; une boucle frangible ; un anneau frangible ; une partie frangible du gabion ; un organe déformable ; un organe hélicoïdal ; et une agrafe (80).

12. Conteneur, gabion ou système de déploiement de gabion conforme à la revendication 11, où la boucle, l'anneau frangible ou la partie frangible du gabion a un point de faiblesse pour encourager le moyen d'attache, de connexion ou d'enclenchement rétenteur à se briser à une position et/ou une charge prédéterminée.

13. Conteneur, gabion ou système de déploiement de gabion conforme à la revendication 11, où l'agrafe (80) est une agrafe de type mousqueton ou une agrafe de type came à ressort.

14. Conteneur, gabion ou système de déploiement de gabion conforme à une quelconque des revendications 1 à 13, où le moyen libérable d'attache, de connexion ou d'enclenchement rétenteur est apte à se libérer à une charge prédéterminée.

15. Conteneur, gabion ou système de déploiement de gabion conforme à la revendication 14, où la charge prédéterminée correspond sensiblement au poids d'une partie du gabion (48), ou à une force de traction exercée sur le gabion.

16. Conteneur, gabion ou système de déploiement de gabion conforme à une quelconque des revendications 1 à 15, où le moyen libérable (50) d'attache, de connexion ou d'enclenchement rétenteur fait partie intégrante du gabion (48).

17. Système de déploiement de gabion comportant un conteneur (30) de section transversale sensiblement rectangulaire, chargé d'un gabion replié du type comprenant des murs latéraux et des traverses connectés, attachés par charnières, un moyen de retenue en forme de câble d'attache courant sensiblement sur la longueur du conteneur et attachant, connectant ou enclenchant pour le retenir périodiquement le gabion replié sur sa longueur, par le moyen de moyens libérables d'attache, de connexion ou d'enclenchement rétenteur, dans lequel les traverses sont placées sensiblement parallèlement à l'extrémité du conteneur et on peut retirer le gabion du conteneur en tirant le gabion du conteneur à l'aide d'une traverse d'extrémité qui se présente quand le conteneur est ouvert, ou en tirant le conteneur tout en maintenant ladite traverse d'extrémité, ou en tirant le conteneur tout en tirant ladite traverse d'extrémité, le poids d'une première unité retirée du gabion entraînant la déconnexion d'un premier moyen d'attache, de connexion ou d'enclenchement rétenteur, et le poids des unités retirées par la suite du gabion entraînant la déconnexion des moyens suivantes d'attache, connexion ou enclenchement rétenteur, le gabion étant déplacé pour prendre une position déployée à sa sortie du conteneur et les moyens libérables d'attache, de connexion ou d'enclenchement rétenteur empêchant la sortie du conteneur des unités sorties ultérieurement du gabion avant que le déploiement de la première unité sortie soit effectif.

18. Conteneur, gabion ou système de déploiement de gabion conforme à une quelconque des revendications 1 à 17, où le plancher du conteneur correspond sensiblement à l'encombrement au sol du gabion.

19. Conteneur, gabion ou système de déploiement de gabion conforme à une quelconque des revendications 1 à 17, où le mur d'extrémité du gabion correspond sensiblement à la section transversale du conteneur.

20. Conteneur, gabion ou système de déploiement de gabion conforme à la revendication 18 ou 19, où la correspondance entre les dimensions intérieures du conteneur et les dimensions du gabion replié est telle que le gabion replié est sensiblement empêché de bouger par les parois du conteneur.

21. Conteneur, gabion ou système de déploiement de gabion conforme à une quelconque des revendications 1 à 20, où le moyen de retenue comprend une série de protubérances, un intervalle entre deux protubérances recevant, à l'utilisation du gabion stocké, la section de bord d'un ou de plusieurs compartiments repliés du gabion multicompartiments.

22. Conteneur, gabion ou système de déploiement de gabion conforme à la revendication 21, où le matériau des protubérances est sélectionné pour avoir une caractéristique élastique.

23. Conteneur, gabion ou système de déploiement de gabion conforme à la revendication 22, où, à l'exercice d'une force de traction pour retirer le gabion replié du conteneur, les protubérances sont aptes à céder suffisamment pour libérer la section de bord de l'intervalle.

24. Conteneur, gabion ou système de déploiement de gabion conformes à une quelconque des revendications 21 à 23, où les protubérances sont elles-mêmes connectées les unes aux autres par le moyen d'un câble de guidage ou d'une tringle qui sert, tant qu'il ou elle est connecté, à maintenir les protubérances dans une orientation où elles ne vont sensiblement pas céder.

25. Conteneur, gabion ou système de déploiement de gabion conforme à la revendication 24, où c'est uniquement quand le câble de guidage est retiré d'une protubérance que la protubérance concernée pourra alors céder pour libérer une section de bord de compartiment de gabion replié.

26. Conteneur, gabion ou système de déploiement de gabion conforme à la revendication 24 ou 25, où le câble de guidage est de plus connecté opérationnellement au gabion replié lui-même.

27. Conteneur, gabion ou système de déploiement de gabion conforme à la revendication 26, où le câble de guidage est passé à travers les protubérances, elles-mêmes dotées d'orifices ou de moyens de connexion aptes à cet usage, vers l'extrémité avant, non d'entrée, du conteneur, autour d'une poulie et puis réenfilé vers l'extrémité arrière, d'entrée, du conteneur à travers le gabion replié, ou à travers des orifices aptes ou des moyens de connexion prévus à cet usage, et fixé au gabion au ou près du premier compartiment du gabion situé à ou vers l'extrémité arrière, d'entrée, du conteneur.

28. Conteneur apte à stocker un gabion replié et à partir duquel le gabion peut être déployé, le conteneur comprenant une base, au moins un mur latéral et un toit, le conteneur étant doté d'un moyen de retenue disposé à l'intérieur, dans, sur ou auquel un gabion replié peut être attaché, connecté ou enclenché pour le retenir de manière libérable par le biais d'au moins un moyen libérable d'attache, de connexion ou d'enclenchement rétenteur ; où le au moins un moyen libérable d'attache, de connexion ou d'enclenchement rétenteur est apte à attacher, connecter ou enclencher pour le retenir une partie du gabion au moyen de retenue quand le gabion est replié mais à libérer le gabion du moyen de retenue quand le gabion est déployé, où le moyen de retenue comprend une série de protubérances et où les moyens libérables d'attache, de connexion ou d'enclenchement rétenteur comprennent des sections de bord de compartiment du gabion replié.

29. Conteneur apte à stocker une barrière de sécurité ou un gabion multicompartiments replié, le conteneur comprenant une base, au moins un mur latéral et un toit, le toit ou une partie supérieure du conteneur étant doté d'un moyen de retenue comprenant une structure en forme de peigne, avec une première dent de peigne ou paire de dents de peigne enclenchant pour retenir un premier mur ou compartiment de barrière de sécurité ou de gabion replié, et une deuxième dent de peigne ou paire de dents de peigne enclenchant pour retenir un deuxième mur ou compartiment de barrière de sécurité ou de gabion.
